# EUROPÄISCHE PATENTANMELDUNG

(11) **EP 2 865 480 A1**
(43) Veröffentlichungstag der Anmeldung: **29.04.2015**
(21) Anmeldenummer: 13189831.4
(22) Anmeldetag: 23.10.2013
(51) Int. Cl.: B23K 26/00, B23K 26/06, B23K 26/34, B23P 6/00

(54) **Auftragsschweißverfahren mit modifizierter auftragsgeschweißter Grundschicht und damit hergestelltes Bauteil**

(71) Anmelder: Siemens Aktiengesellschaft, 80333 München (DE)
(72) Erfinder: Arjakine, Nikolai, 10555 Berlin (DE); Burbaum, Bernd, 14612 Falkensee (DE); Jokisch, Torsten, 15366 Neuenhagen bei Berlin (DE)

(57) **Zusammenfassung**

Durch eine veränderte Auftragsschweißung auf ein Substrat mit der Erzeugung von kleinen Korngrößen ergibt sich eine rissfreie Anbindung von einer Auftragsschweißung mit größeren Korngrößen.

## Beschreibung

Die Erfindung betrifft ein Schweißverfahren, bei dem zuerst eine Grundschicht mit veränderter Mikrostruktur aufgetragen wird, auf die dann weitere Schweißlagen aufgetragen werden können, die eine unterschiedliche Mikrostruktur aufweisen.

Auftragsschweißverfahren um abgetragenes Material wieder aufzubauen sind Stand der Technik.
Ebenso bekannt sind Laserschweißverfahren.
Ebenso bekannt ist es, Spitzen von Turbinenschaufeln, die der Erosion unterlagen, wieder aufzubauen.

Dabei darf die Auftragsschweißung keine Rissneigung aufweisen.

Es ist daher Aufgabe der Erfindung ein Auftragsschweißverfahren aufzuzeigen, bei dem Risse zwischen aufgeschweißtem Material und Substrat vermieden werden.

Die Aufgabe wird gelöst durch ein Verfahren gemäß Anspruch 1 und ein Bauteil gemäß Anspruch 11.

In den Unteransprüchen sind weitere vorteilhafte Maßnahmen aufgelistet, die beliebig miteinander kombiniert werden können, um weitere Vorteile zu erzielen.

Durch das Verfahren und Bauteil werden Risse vermieden und längere Einsatzzeiten erzielt.

Es zeigen:
- Figur 1: ein Anwendungsbeispiel und
- Figur 2: eine Liste von Superlegierungen.

Die Figuren und die Beschreibung stellen nur Ausführungsbeispiele der Erfindung dar.

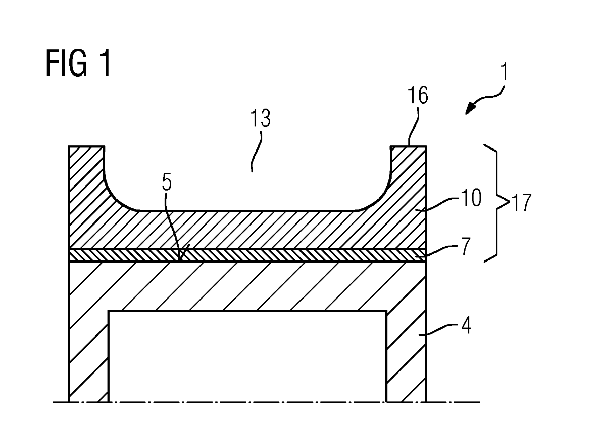

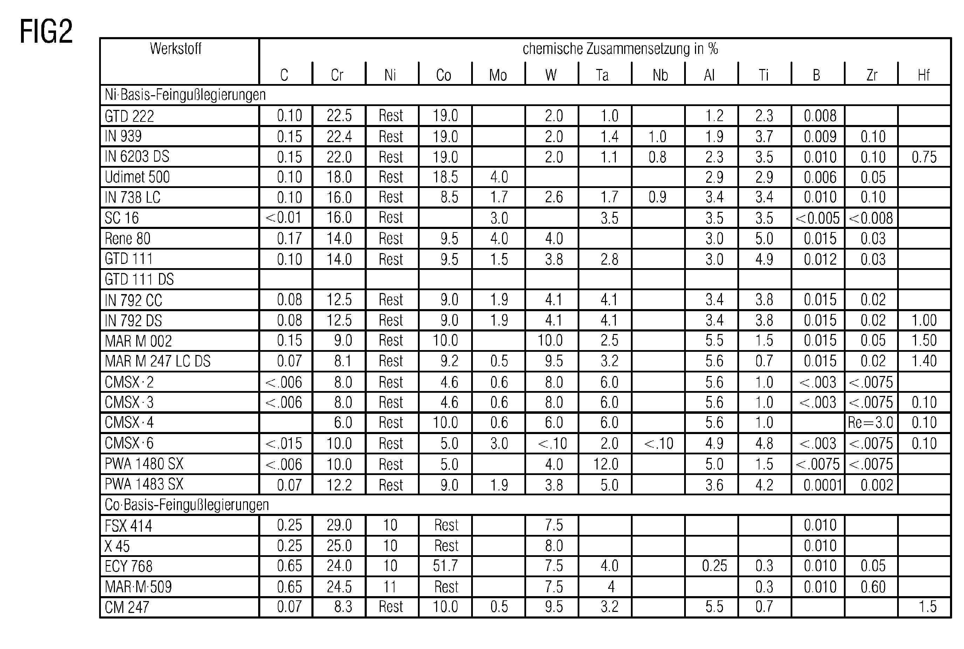

Figur 1 zeigt ein Bauteil 1 mit einem Substrat 4, auf das Material aufgetragen werden soll.
Das Substrat 4 ist vorzugweise eine nickel- oder kobaltbasierte Superlegierung, wie sie bei Turbinenschaufeln oder anderen Turbinenkomponenten, insbesondere von Gasturbinen verwendet wird, ganz vorzugsweise gemäß Figur 2.

Auf das Substrat 4 mit der Oberfläche 5 soll Material 17 aufgetragen werden.
Die Oberfläche 5 des Substrats 4 wurde optional entsprechend vorbereitet. Substrate 4, die im Einsatz waren, werden vorzugsweise frästechnisch vorbereitet.

Dabei wird erfindungsgemäß in einem ersten Schritt eine erste geschweißte Grundschicht 7 erzeugt, die eine feinkörnige Mikrostruktur aufweist, die vorzugsweise Korngrößen von maximal 200µm aufweist.

Dies erfolgt vorzugsweise dadurch, dass in die Oberfläche 5 Druckspannungen eingebracht werden.
Dies kann vorzugsweise durch Kugelbestrahlungen oder Laserdruckstrahlung erfolgen.
Dadurch wachsen bei der Auftragsschweißung kleine Körner.

Dann oder alternativ ohne Druckeigenspannungsvorbehandlung werden in einem ersten Auftragsschweißprozess zwei bis drei Schweißlagen mit einer Schichtdicke der ersten geschweißten Grundschicht 7 vorzugsweise von 400µm bis 600µm aufgetragen, ganz insbesondere von 400µm ± 10%.

Dabei wird eine kleine Umschmelztiefe von maximal 150µm, insbesondere maximal 100µm im Substrat 4 verwendet, so dass viele kleine Korngrößen entstehen, die später im Einsatz Heißrisse in der ersten geschweißten Grundschicht 7 vermeiden.

Danach wird weiteres Material für eine Aufbauschicht 10 aufgetragen, bei dem der Laserstrahl-Durchmesser vorzugweise vergrößert wird, ganz vorzugweise auf 1,0mm bis 1,5mm vergrößert wird, was zu einer deutlich größeren Korngröße gegenüber den Körnern der ersten geschweißten Grundschicht (7) führt, wobei größere Korngrößen mindestens 20% größer bedeutet.

Zur Definition der Korngrößen können beliebige Größen wie mittlere Korngrößen, integrale Korngrößen, usw. verwendet werden.

In diesem Beispiel ist der aufgetragene Bereich 17 ein so genannter Kronenboden mit einer Vertiefung 13 und einer äußeren Wand 16. Die Wand 16 weist nicht die feinkörnige Mikrostruktur der ersten geschweißten Grundschicht 7 auf.

Ebenso kann der neu aufgetragene Bereich 17 an seiner Oberfläche eine ebene Fläche darstellen.

Ebenso kann ohne die vorherige Erzeugung von Druckeigenspannung die erste geschweißte Grundschicht 7 erzeugt werden, die dann optional wiederum Druckspannungen unterworfen wird und durch ein Umschmelzen in kleinere Körner kristallisiert. Weitere Verfahren zur Erzeugung kleiner Körner für die erste geschweißte Grundschicht 7 sind denkbar.

## Patentansprüche

1. Verfahren
zur Auftragsschweißung (7, 10, 17) auf ein Substrat (4) mit einer Oberfläche (5),
bei dem zuerst eine erste geschweißte Grundschicht (7) mit kleinen Korngrößen erzeugt wird,
insbesondere direkt auf der Oberfläche (5),
in einem zweiten Schritt ein gegenüber der ersten geschweißten Grundschicht (7) veränderter Auftragsschweißprozess zur Erzeugung einer Aufbauschicht (10) durchgeführt wird,
insbesondere direkt auf der ersten geschweißten Grundschicht (7),
der zu größeren Korngrößen in der Aufbauschicht (10) führt, wobei größere Korngrößen mindestens 20% größer bedeutet.

2. Verfahren nach Anspruch 1,
bei dem in die Oberfläche (5) des Substrats (4) Druckeigenspannungen eingebracht werden.

3. Verfahren nach Anspruch 2,
bei dem durch eine Kugelbestrahlung Druckeigenspannungen im Substrat (4) erzeugt werden.

4. Verfahren nach Anspruch 2,
bei dem durch eine Laserstrahlbehandlung Druckeigenspannungen im Substrat (4) erzeugt werden.

5. Verfahren nach einem oder mehreren der Ansprüche 1, 2, 3 oder 4,
bei dem zumindest eine,
insbesondere mehrere Schweißlagen für die erste geschweißte Grundschicht (7) erzeugt werden,
insbesondere nur zwei Schweißlagen,
mit einer Dicke insbesondere von 400µm bis 600µm,
ganz insbesondere 400µm ± 10%,
der ersten geschweißten Grundschicht (7).

6. Verfahren nach einem oder beiden der Ansprüche 1 oder 5,
bei dem ein Laserauftragsschweißen verwendet wird.

7. Verfahren nach einem oder mehreren der Ansprüche 1, 2, 3, 4, 5 oder 6,
bei dem Korngrößen von maximal 200µm für die erste geschweißte Grundschicht (7) erzeugt werden.

8. Verfahren nach einem oder mehreren der Ansprüche 1, 2, 3, 4, 5, 6 oder 7,
bei dem die Umschmelztiefe des Substrats (4) maximal 150µm, insbesondere maximal 100µm beträgt.

9. Verfahren nach einem oder mehreren der Ansprüche,
bei dem für die größeren Körner der Aufbauschicht (10) ein größerer Laserstrahldurchmesser verwendet wird.

10. Verfahren nach Anspruch 9,
bei dem für die Aufbauschicht (10) ein Laserstrahldurchmesser von 1,0mm bis 1,5mm verwendet wird.

11. Bauteil,
insbesondere hergestellt nach einem oder mehreren der vorhergehenden Ansprüche 1, 2, 3, 4, 5, 6, 7, 8, 9 oder 10, das ein Substrat (4),
insbesondere ein gegossenes Substrate (4),
aufweist,
das eine Auftragsschweißung als erste geschweißte Grundschicht (7) mit kleinen Korngrößen und
einer äußeren Auftragsschweißung als Aufbauschicht (10) mit größeren Korngrößen aufweist,
wobei größere Korngrößen mindestens 20% größer bedeutet.

12. Bauteil nach Anspruch 11,
bei dem die erste geschweißte Grundschicht (7) deutlich dünner ist,
insbesondere mindestens 20% dünner ist als die Aufbauschicht (10),
ganz insbesondere 400µm bis 600µm dick ist.

13. Bauteil nach einem oder beiden der Ansprüche 11 oder 12,
bei dem die erste geschweißte Grundschicht (7) Korngrößen von maximal 200µm aufweist.
